# EUROPEAN PATENT APPLICATION

(11) **EP 4 763 501 A1**
(43) Date of publication of application: **24.06.2026**
(21) Application number: 25858492.9
(22) Date of filing: 30.05.2025
(51) Int. Cl.: B29D 30/06, B29C 33/24

(54) **PRESSING APPARATUS AND VULCANIZING MACHINE**

(30) Priority: 30.08.2024 CN 202411204680
(71) Applicant: ARP Technologies (Suzhou) Co., Ltd., Suzhou, Jiangsu 215216 (CN)
(72) Inventor: LIU, Baolong, Suzhou, Jiangsu 215216 (CN); TANG, Yafeng, Suzhou, Jiangsu 215216 (CN); WANG, Chaoqiang, Suzhou, Jiangsu 215216 (CN); YOU, Bin, Suzhou, Jiangsu 215216 (CN)
(74) Representative: Biallo, Dario
(86) International application number: PCT/CN2025/098319
(87) International publication number: WO 2026/045444

(57) **Abstract**

Provided is a pressurizing device used for providing a mold clamping force for a mold. The pressurizing device includes a base (1), a movement groove (11), a support plate (2), a reset groove (12), a lower pull rod (3), a nitrogen supply assembly (9), an upper pull rod (4), and a cross beam (5). The pressurizing device in this application applies pressure to the cross beam (5) so that the mold clamping force can be provided for the mold from the upper side of the mold. Compared with the mode of applying pressure to the lower side of the mold upward through a force-applying oil cylinder in the related art, the pressurizing device does not need to overcome the gravity of the mold and related parts. Thus, the performance requirement on the parts providing the pressure can be reduced, thereby enabling the reduction of the use cost.

## Description

This application claims priority to Chinese Patent Application No. 202411204680.9 filed with the China National Intellectual Property Administration (CNIPA) on Aug. 30, 2024, the disclosure of which is incorporated herein by reference in its entirety.

### TECHNICAL FIELD

The present application relates to the technical field of vulcanizing equipment, for example, a pressurizing device and a vulcanizing machine.

### BACKGROUND

At present, tires are generally vulcanized through a vulcanizing machine. To ensure that a mold is provided with a sufficient mold clamping force, a pressurizing device is typically required to apply pressure to the mold in the vulcanization stage, so as to ensure the vulcanization quality.

A pressurizing device in the related art generally includes a force-applying oil cylinder disposed on a base. A lower support plate is pushed upward through the force-applying oil cylinder to apply a certain acting force to a lower mold, so as to provide a clamping force for the mold to vulcanize a tire. However, when applying the force, the force-applying oil cylinder not only needs to provide the clamping force for the mold to vulcanize the tire, but also needs to overcome the gravity of the lower support plate, the mold, and the tire. Therefore, a relatively high performance requirement is imposed on the force-applying oil cylinder, and the use cost is relatively high. That is, the oil cylinder and a hydraulic station adopted by the pressurizing device in the related art are costly. In addition, hydraulic oil has a leakage risk, and hydraulic oil leakage may pollute the equipment and the environment.

### SUMMARY

The present application provides a pressurizing device and a vulcanizing machine to solve the problems of high costs of an oil cylinder and a hydraulic station adopted by a pressurizing device in the related art, the risk of hydraulic oil leakage, and the pollution of the equipment and the environment caused by the hydraulic oil leakage.

An embodiment of the present application provides a pressurizing device used for providing a mold clamping force for a mold. The pressurizing device includes a base, a support plate, a lower pull rod, a nitrogen supply assembly, an upper pull rod, and a cross beam.

The base is configured to bear the mold, where the base includes a movement groove and a reset groove, the movement groove is provided on the base along a vertical direction, the lower side of the movement groove is configured to be in an open state, and the reset groove penetrates through and is provided on the base along the vertical direction.

The support plate includes a sliding portion slidably embedded in the movement groove, where the sliding portion is sealingly connected to a groove wall of the movement groove, and a movement cavity is formed between the sliding portion and the groove wall of the movement groove.

The lower pull rod penetrates through the reset groove and is in a sliding fit with the reset groove, where the lower pull rod is sealingly connected to a groove wall of the reset groove, a reset cavity is formed between the lower pull rod and the groove wall of the reset groove, and the support plate includes a connecting portion connected to the lower pull rod.

The nitrogen supply assembly is configured to supply nitrogen gas into the movement cavity so as to push the support plate to move downward along the movement groove, and the nitrogen supply assembly is configured to supply nitrogen gas into the reset cavity so as to push the lower pull rod to move upward along the reset groove.

The upper pull rod is detachably connected to the upper end of the lower pull rod.

The cross beam is disposed on the upper pull rod, where the cross beam is capable of abutting against the upper side of the mold.

In some embodiments, the movement groove is configured to be annular, and the support plate conforms to the movement groove in shape.

Multiple lower pull rods are provided and uniformly distributed on the support plate.

The number of reset grooves and the number of upper pull rods are configured to correspond to the number of the multiple lower pull rods, and the multiple upper pull rods are connected at multiple positions on the peripheral side of the cross beam, respectively.

In some embodiments, the pressurizing device further includes a limit member.

The limit member is detachably disposed on the lower pull rod, where the limit member is configured to limit the maximum movement distance of the lower pull rod.

In some embodiments, the limit member includes a limit ring and a fixing member.

The limit ring has an opening, where an annular mounting groove is provided on the lower pull rod, and the limit ring is embedded in the annular mounting groove.

The fixing member is configured to lock the opening of the limit ring.

In some embodiments, the pressurizing device further includes an adjustment assembly.

The adjustment assembly is disposed between the upper pull rod and the cross beam, where the adjustment assembly is configured to adjust the position of the cross beam on the upper pull rod.

In some embodiments, the adjustment assembly includes a hoop and multiple gaskets.

The hoop is detachably disposed at the upper end of the upper pull rod.

The multiple gaskets are capable of being stacked and sleeved on the upper pull rod and are located between the hoop and the cross beam.

In some embodiments, the pressurizing device further includes a quick-release assembly.

The quick-release assembly is disposed between the lower pull rod and the upper pull rod to control the connection or disconnection between the lower pull rod and the upper pull rod.

In some embodiments, the quick-release assembly includes a bayonet head and a bayonet groove.

The bayonet head is disposed at the lower end of the upper pull rod.

The bayonet groove is provided at the upper end of the lower pull rod, where the bayonet head is capable of being engaged with and connected to the bayonet groove.

In some embodiments, the lower pull rod is rotatably disposed on the base, the lower pull rod moves upward to an initial position along the reset groove, and an adjustment gap is formed between the bayonet head and the bayonet groove to ensure that the lower pull rod is rotatable.

An embodiment of the present application further provides a vulcanizing machine. The vulcanizing machine includes the preceding pressurizing device and a mold, and the pressurizing device is used for providing a mold clamping force for the mold.

### BRIEF DESCRIPTION OF DRAWINGS

FIG. 1 is a structural view of a pressurizing device according to the present application.
FIG. 2 is a structural view of a pressurizing device with a quick-release assembly and a cross beam removed according to the present application.
FIG. 3 is an enlarged view of part A in FIG. 1.
FIG. 4 is a structural view of a nitrogen supply assembly in a pressurizing device according to the present application.
FIG. 5 is a structural diagram of a vulcanizing machine according to the present application.

### Reference list

- 1: base
- 11: movement groove
- 12: reset groove
- 13: movement cavity
- 14: reset cavity
- 2: support plate
- 21: sealing ring
- 22: sliding portion
- 23: connecting portion
- 24: vent
- 3: lower pull rod
- 4: upper pull rod
- 5: cross beam
- 6: limit member
- 61: limit ring
- 62: fixing member
- 7: adjustment assembly
- 71: hoop
- 72: gasket
- 8: quick-release assembly
- 81: bayonet head
- 82: bayonet groove
- 9: nitrogen supply assembly
- 100: vulcanizing machine
- 200: pressurizing device
- 300: mold

### DETAILED DESCRIPTION

Before any embodiment of the present application is explained, it is to be understood that the present application is not limited to its application in the structural details and the arrangement of components set forth in the following description or shown in the preceding drawings.

In the present application, the term "comprising", "including", "having", or any other variation thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. Without further limitations, an element defined by the phrase "comprising a..." does not preclude the presence of additional identical elements in the process, method, article, or apparatus that includes this element.

In the present application, the term "and/or" is an association relationship describing associated objects and indicates that three relationships may exist. For example, one centrifugal vortex magnetic pump and/or another centrifugal vortex magnetic pump may represent the following three situations: the presence of only one centrifugal vortex magnetic pump, the presence of two different types of centrifugal vortex magnetic pumps at the same time, and the presence of only another type of centrifugal vortex magnetic pump. In addition, in the present application, the character "/" generally indicates an "and/or" relationship between associated objects before and after the character "/".

In the present application, the terms "connected", "combined", "coupled", or "mounted" may be directly connected, combined, coupled, or mounted and may also be indirectly connected, combined, coupled, or mounted. For example, the direct connection indicates that two parts or assemblies are connected together without an intermediate piece, and the indirect connection indicates that two parts or assemblies are separately connected to at least one intermediate piece and the two parts or assemblies are connected through the intermediate piece. Furthermore, "connected" or "coupled" are not limited to physical or mechanical connections or couplings and may include electrical connections or couplings.

In the present application, those of ordinary skill in the art will understand that a relative term used in conjunction with quantities or conditions (for example, "about", "approximately", "substantially", or the like) is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that a function implemented by an assembly may be implemented by one assembly, multiple assemblies, one part, or multiple parts. Similarly, a function implemented by a part may be implemented by one part, one assembly, or a combination of parts.

In the present application, the terms "upper", "lower", "left", "right", "front", "rear", and other orientation words are described by the orientations and position relationships shown in the drawings. In addition, in the context, it is to be understood that when an element is connected "above" or "below" another element, the element not only can be directly connected "above" or "below" another element but also can be indirectly connected "above" or "below" another element through an intermediate element. It is also to be understood that orientation words such as an upper side, a lower side, a left side, a right side, a front side, and a rear side not only represent positive orientations but also may be understood as lateral orientations. For example, the term "below" may refer to "directly below", "on a lower left", "on a lower right", "on a front lower side", "on a rear lower side", and the like.

Based on the content mentioned above, a pressurizing device in the related art generally includes a force-applying oil cylinder disposed on a base. A lower support plate is pushed upward through the force-applying oil cylinder to apply a certain acting force to a lower mold, so as to provide a clamping force for the mold to vulcanize a tire. However, when applying the force, the force-applying oil cylinder not only needs to provide the clamping force for the mold to vulcanize the tire, but also needs to overcome the gravity of the lower support plate, the mold, and the tire. Therefore, a relatively high performance requirement is imposed on the force-applying oil cylinder, and the use cost is relatively high. In addition, since the lower support plate is pushed through the force-applying oil cylinder to clamp the mold, the clamped mold always remains on the lower support plate. When the mold needs to be replaced afterward, the force-applying oil cylinder needs to drive the lower support plate downward to provide an operation space for the replacement of the mold. However, the upper side of the mold is always obstructed by the components used for fixing an upper mold, resulting in a relatively narrow operation space that is inconvenient for operation.

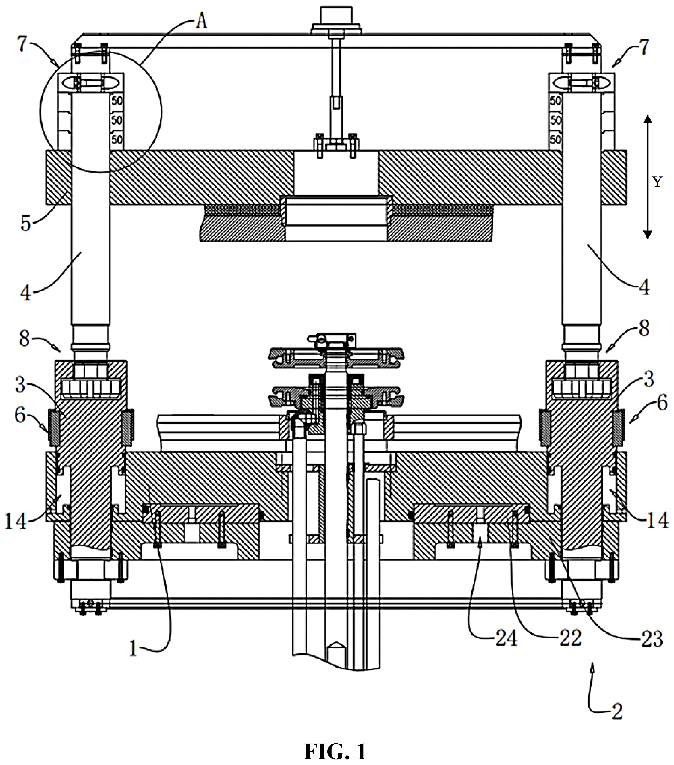

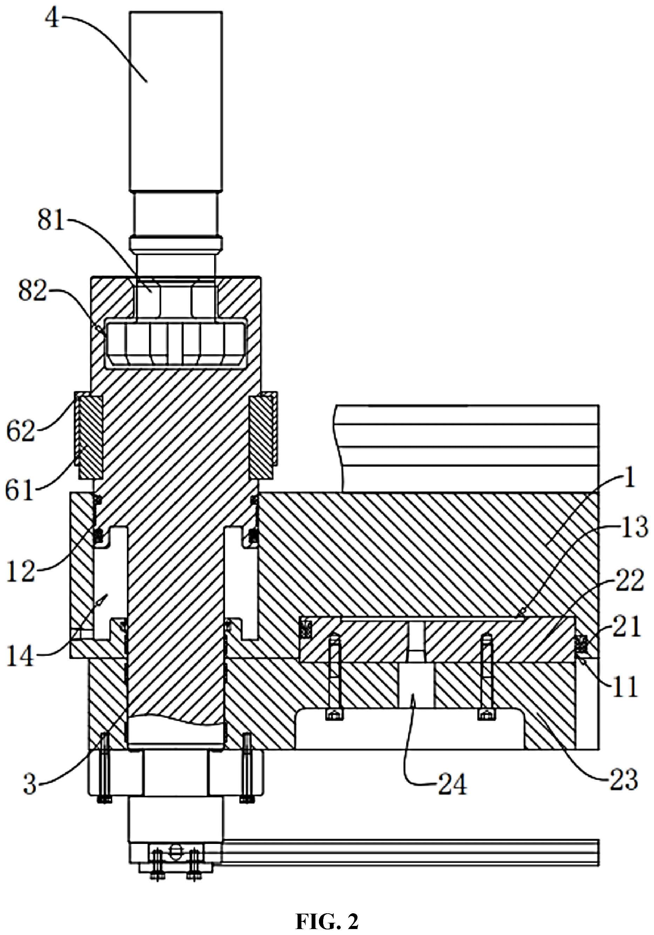

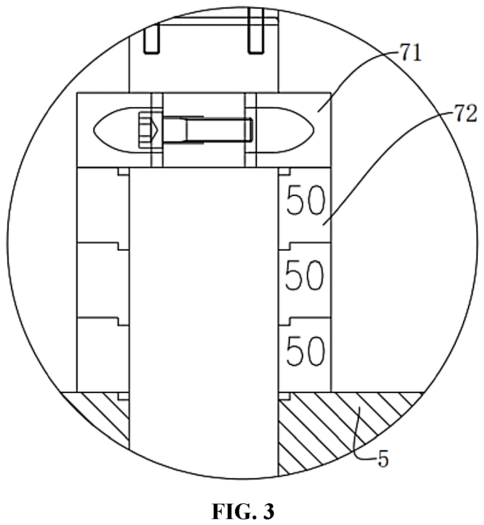

To solve the preceding problems, referring to FIGS. 1 to 4, this embodiment provides a pressurizing device used for providing a mold clamping force for a mold. The pressurizing device includes a base 1, a support plate 2, a lower pull rod 3, a nitrogen supply assembly 9, an upper pull rod 4, and a cross beam 5.

The base 1 includes a movement groove 11 and a reset groove 12.

The base 1 is configured to bear the mold. For the base 1, reference may be made to the structure in the related art. The base 1 includes multiple parts used in conjunction with a mold, for example, a tooling for fixing the mold. The movement groove 11 is provided on the base 1 along a vertical direction Y, and the lower side of the movement groove 11 is configured to be in an open state. The support plate 2 includes a sliding portion 22 slidably embedded in the movement groove 11. The sliding portion 22 is sealingly connected to a groove wall of the movement groove 11, and a movement cavity 13 is formed between the sliding portion 22 and the groove wall of the movement groove 11. The reset groove 12 penetrates through and is provided on the base 1 along the vertical direction Y. The lower pull rod 3 penetrates through the reset groove 12 and is in a sliding fit with the reset groove 12. The lower pull rod 3 is sealingly connected to a groove wall of the reset groove 12, and a reset cavity 14 is formed between the lower pull rod 3 and the groove wall of the reset groove 12. The support plate 2 includes a connecting portion 23 connected to the lower pull rod 3. In this embodiment, the sliding portion 22 is locked on the connecting portion 23 through a bolt, and the support plate 2 is formed by combining the sliding portion 22 and the connecting portion 23.

The nitrogen supply assembly 9 is configured to supply nitrogen gas into the movement cavity 13 so as to push the support plate 2 to move downward along the movement groove 11. In addition, the nitrogen supply assembly 9 is configured to supply nitrogen gas into the reset cavity 14 so as to push the lower pull rod 3 to move upward along the reset groove 12. The upper pull rod 4 is detachably connected to the upper end of the lower pull rod 3. The cross beam 5 is disposed on the upper pull rod 4, and the cross beam 5 is capable of abutting against the upper side of the mold. It is to be noted that in this embodiment, the sliding portion 22 and the connecting portion 23 are provided with vents 24 that communicate with each other, and the nitrogen gas supplied by the nitrogen supply assembly 9 is inputted into the movement cavity 13 through the vents 24.

The process where the mold clamping force is applied is as follows: the nitrogen gas is supplied into the movement cavity 13 by the nitrogen supply assembly 9 to push the support plate 2 to move downward along the movement groove 11, then the support plate 2 drives the lower pull rod 3 to move downward, afterwards, the lower pull rod 3 applies pressure to the cross beam 5 through the upper pull rod 4, and the cross beam 5 transmits the pressure to the upper side of the mold on the base 1, thereby providing the mold clamping force for the mold. The application of the mold clamping force is completed at this point.

A mold replacement process is as follows: the nitrogen gas is supplied into the reset cavity 14 by the nitrogen supply assembly 9 to push the lower pull rod 3 to move upward along the reset groove 12 so that the cross beam 5 no longer applies the pressure to the upper side of the mold, then the upper pull rod 4 is detached from the lower pull rod 3, that is, the cross beam 5 can be removed from the upper side of the mold, afterwards, the mold is detached from the base 1 and then another mold is placed on the base 1, and finally the upper pull rod 4 is assembled onto the lower pull rod 3. The replacement of the mold is completed at this point.

The pressure is applied to the cross beam 5 so that the mold clamping force can be provided for the mold from the upper side of the mold. Compared with the mode of applying pressure to the lower side of the mold upward through the force-applying oil cylinder in the related art, the pressurizing device does not need to overcome the gravity of the mold and related parts. Thus, the performance requirement on the parts providing the pressure can be reduced, thereby enabling the reduction of the use cost. It is further to be understood that in the mold replacement process, the upper pull rod 4 may be detached from the lower pull rod 3 so that the upper side of the mold cannot be obstructed. Thus, a relatively large operation space can be provided for replacing the mold, facilitating operation. In addition, a drive force is provided through the nitrogen supply assembly 9. A drive force is provided by the pressurizing device in the related art through the oil cylinder, and in comparison, nitrogen gas is clean energy, which is easy to obtain, has no pollution to the environment, and has a lower use cost. Moreover, traditional oil cylinders and hydraulic stations can be eliminated so that the risk of hydraulic oil leakage is avoided and the equipment and the environment are cleaner. In addition, there is no relative movement between the central mechanism of the pressurizing device and the base of the pressurizing device, which can ensure the running precision of the central mechanism.

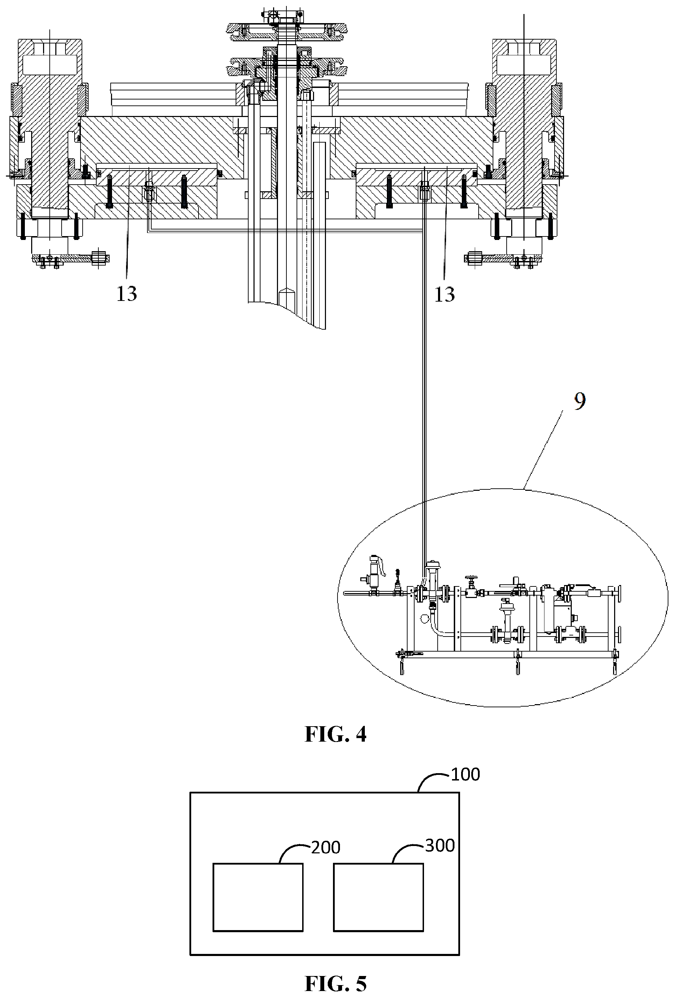

In some embodiments, referring to FIG. 4, FIG. 4 is a structural view of the nitrogen supply assembly in a pressurizing device according to the present application. The schematic view shows the connection relationship between the nitrogen supply assembly 9 and the movement cavity 13 by way of example, that is, how the nitrogen supply assembly 9 supplies the nitrogen gas into the movement cavity 13 to be capable of pushing the support plate 2 to move downward along the movement groove 11.

In some embodiments, the nitrogen supply assembly 9 may also be connected to the reset cavity 14, and the nitrogen gas is inputted through vents of the reset cavity 14 to push the lower pull rod 3 to move upward along the reset groove 12.

In some embodiments, for the internal structure of the nitrogen supply assembly 9 and the working principle of the nitrogen supply assembly 9, reference may be made to the related art.

In some embodiments, the movement groove 11 is configured to be annular, and the support plate 2 conforms to the movement groove 11 in shape. Multiple lower pull rods 3 are provided and uniformly distributed on the support plate 2. The number of reset grooves 12 and the number of upper pull rods 4 are configured to correspond to the number of the lower pull rods 3, and the multiple upper pull rods 4 are connected at multiple positions on the peripheral side of the cross beam 5, respectively. With this configuration, the support plate 2 can simultaneously drive the multiple lower pull rods 3 to move downward, and thus the multiple upper pull rods 4 are driven to move downward so that the multiple upper pull rods 4 can simultaneously apply pressure to the multiple positions of the cross beam 5. That is, the pressure can be simultaneously applied to the multiple positions on the upper side of the mold so that a more uniform mold clamping force is provided for the mold.

To prevent the support plate 2 from being separated from the movement groove 11 during use and causing inconvenience, the pressurizing device further includes a limit member 6. The limit member 6 is detachably disposed on the lower pull rod 3, and the limit member 6 is configured to limit the maximum movement distance of the lower pull rod 3.

In this embodiment, the support plate 2 and the movement groove 11 are sealed through a sealing ring 21, and the sealing ring 21 is a vulnerable part and needs to be replaced regularly. It is to be understood that the limit member 6 is detachably disposed on the lower pull rod 3 so that the limit member 6 can be detached when the sealing ring 21 needs to be replaced.

For example, the limit member 6 includes a limit ring 61 and a fixing member 62. The limit ring 61 has an opening. An annular mounting groove is provided on the lower pull rod 3, and the limit ring 61 is embedded in the annular mounting groove. The fixing member 62 is configured to lock the opening of the limit ring 61. In the process where the limit ring 61 is assembled and disassembled, two ends of the limit ring 61 are pulled outward so that the limit ring 61 is deformed, that is, the opening can be enlarged. Thus, it is convenient to embed the limit ring 61 into the annular mounting groove or remove the lower limit ring 61 from the annular mounting groove. It is to be noted that the fixing member 62 may be any fastening structure in the related art, such as a bolt and a nut.

In some embodiments, the movement distance of the upper pull rod 4 is limited by the movement distance of the support plate 2, that is, the movement distance of the upper pull rod 4 is limited by the depth of the movement groove 11. However, to ensure the production efficiency, the movement groove 11 may be configured to be shallow so that the movement path is shortened and the pressure is more efficiently applied to the mold. Thus, the pressurizing device is caused to be unable to clamp various molds with relatively large height differences.

To enable the pressurizing device to be suitable for various molds of different heights, the pressurizing device further includes an adjustment assembly 7. The adjustment assembly 7 is disposed between the upper pull rod 4 and the cross beam 5. The adjustment assembly 7 is configured to adjust the position of the cross beam 5 on the upper pull rod 4. With this configuration, the spacing between the cross beam 5 and the mold can be adjusted so that pressure can be applied to molds of different heights through the cross beam 5.

For example, the adjustment assembly 7 includes a hoop 71 and multiple gaskets 72. The hoop 71 is detachably disposed at the upper end of the upper pull rod 4. The multiple gaskets 72 are capable of being stacked and sleeved on the upper pull rod 4 and are located between the hoop 71 and the cross beam 5. It is to be understood that the position of the beam 5 is adjusted through the number of stacked gaskets 72 so that the structure is simple, and the use cost is low. It is to be noted that for the hoop 71, reference may be made to the structure in the related art. It is further to be noted that the models of the gaskets 72 may be selected according to an actual use scenario.

In some embodiments, the pressurizing device further includes a quick-release assembly 8. The quick-release assembly 8 is disposed between the lower pull rod 3 and the upper pull rod 4 to control the connection or disconnection between the lower pull rod 3 and the upper pull rod 4. This configuration helps improve the efficiency with which the mold is replaced. In this embodiment, the quick-release assembly 8 includes a bayonet head 81 and a bayonet groove 82. The bayonet head 81 is disposed at the lower end of the upper pull rod 4. The bayonet groove 82 is provided at the upper end of the lower pull rod 3, and the bayonet head 81 can be engaged with and connected to the bayonet groove 82. It is to be noted that for the quick-release structure constituted by the bayonet head 81 and the bayonet groove 82, reference may be made to the related art. For example, after the bayonet head 81 is inserted into the bayonet groove 82, the bayonet head 81 or the bayonet groove 82 is rotated by a preset angle so that the bayonet head 81 is engaged with the bayonet groove 82, that is, the bayonet head 81 and the bayonet groove 82 are connected to each other. Conversely, the bayonet head 81 or the bayonet groove 82 is rotated so that the bayonet head 81 is disengaged from the bayonet groove 82, that is, the bayonet head 81 can be taken out from the bayonet groove 82, and the bayonet head 81 and the bayonet groove 82 are separated from each other.

In some embodiments, the lower pull rod 3 is rotatably disposed on the base 1, the lower pull rod 3 moves upward to an initial position along the reset groove 12, and an adjustment gap is formed between the bayonet head 81 and the bayonet groove 82 to ensure that the lower pull rod 3 is rotatable. With this configuration, it is more convenient to rotate the lower pull rod 3, that is, it is more convenient to rotate the bayonet groove 82, thereby facilitating operation. It is to be noted that the configuration of the adjustment gap is well known to those skilled in the art.

Referring to FIG. 5, this embodiment further provides a vulcanizing machine 100. The vulcanizing machine 100 includes the preceding pressurizing device 200 and a mold 300, and the pressurizing device 200 is used for providing a mold clamping force for the mold 300. It is to be understood that the vulcanizing machine 100 including the preceding pressurizing device 200 has a low use cost and facilitates mold replacement.

The present application includes at least the characteristics described below.
1. In the pressurizing device provided in the present application, the drive force is provided through the nitrogen supply assembly. The drive force is provided by the pressurizing device in the related art through the oil cylinder, and in comparison, nitrogen gas is clean energy, which is easy to obtain, has no pollution to the environment, and has the lower use cost.
2. In the pressurizing device provided in the present application, the drive force is provided through the nitrogen supply assembly, and traditional oil cylinders and hydraulic stations can be eliminated so that the risk of hydraulic oil leakage is avoided and the equipment and the environment are cleaner.
3. The pressurizing device provided in the present application applies the pressure to the cross beam so that the mold clamping force can be provided for the mold from the upper side of the mold. Compared with the mode of applying the pressure to the lower side of the mold upward through the force-applying oil cylinder in the related art, the pressurizing device does not need to overcome the gravity of the mold and the related parts. Thus, the performance requirement on the parts providing the pressure can be reduced, thereby enabling the reduction of the use cost.
4. In the mold replacement process of the pressurizing device provided in the present application, the upper pull rod may be detached from the lower pull rod so that the upper side of the mold cannot be obstructed. Thus, the relatively large operation space can be provided for replacing the mold, facilitating the operation.
5. In the pressurizing device provided in the present application, there is no relative movement between the central mechanism and the base, which can ensure the running precision of the central mechanism.
6. The vulcanizing machine provided in the present application includes the preceding pressurizing device so that the vulcanizing machine has the low use cost and facilitates the mold replacement.

## Claims

1. A pressurizing device used for providing a mold clamping force for a mold and comprising:
a base (1) configured to bear the mold, wherein the base comprises a movement groove (11) and a reset groove (12), the movement groove (11) is provided on the base (1) along a vertical direction, a lower side of the movement groove (11) is configured to be in an open state, and the reset groove (12) penetrates through and is provided on the base (1) along the vertical direction;
a support plate (2) comprising a sliding portion (22) slidably embedded in the movement groove (11), wherein the sliding portion (22) is sealingly connected to a groove wall of the movement groove (11), and a movement cavity (13) is formed between the sliding portion (22) and the groove wall of the movement groove (11);
a lower pull rod (3) which penetrates through the reset groove (12) and is in a sliding fit with the reset groove (12), wherein the lower pull rod (3) is sealingly connected to a groove wall of the reset groove (12), a reset cavity (14) is formed between the lower pull rod (3) and the groove wall of the reset groove (12), and the support plate (2) comprises a connecting portion (23) connected to the lower pull rod (3);
a nitrogen supply assembly (9), wherein the nitrogen supply assembly (9) is configured to supply nitrogen gas into the movement cavity (13) so as to push the support plate (2) to move downward along the movement groove (11), and the nitrogen supply assembly (9) is configured to supply nitrogen gas into the reset cavity (14) so as to push the lower pull rod (3) to move upward along the reset groove (12);
an upper pull rod (4) detachably connected to an upper end of the lower pull rod (3); and a cross beam (5) disposed on the upper pull rod (4), wherein the cross beam (5) is capable of abutting against an upper side of the mold.

2. The pressurizing device according to claim 1, wherein the movement groove (11) is configured to be annular, and the support plate (2) conforms to the movement groove (11) in shape;
a plurality of lower pull rods (3) are provided and uniformly distributed on the support plate (2); and
a number of reset grooves (12) and a number of upper pull rods (4) are configured to correspond to a number of the plurality of lower pull rods (3), and the plurality of upper pull rods (4) are connected at a plurality of positions on a peripheral side of the cross beam (5), respectively.

3. The pressurizing device according to claim 1, further comprising:
a limit member (6) detachably disposed on the lower pull rod (3), wherein the limit member (6) is configured to limit a maximum movement distance of the lower pull rod (3).

4. The pressurizing device according to claim 3, wherein the limit member (6) comprises:
a limit ring (61) having an opening, wherein an annular mounting groove is provided on the lower pull rod (3), and the limit ring (61) is embedded in the annular mounting groove; and
a fixing member (62) configured to lock the opening of the limit ring (61).

5. The pressurizing device according to claim 1, further comprising:
an adjustment assembly (7) disposed between the upper pull rod (4) and the cross beam (5), wherein the adjustment assembly (7) is configured to adjust a position of the cross beam (5) on the upper pull rod (4).

6. The pressurizing device according to claim 5, wherein the adjustment assembly (7) comprises:
a hoop (71) detachably disposed at an upper end of the upper pull rod (4); and
a plurality of gaskets (72), wherein the plurality of gaskets (72) are capable of being stacked and sleeved on the upper pull rod (4) and are located between the hoop (71) and the cross beam (5).

7. The pressurizing device according to claim 1, further comprising:
a quick-release assembly (8), wherein the quick-release assembly (8) is disposed between the lower pull rod (3) and the upper pull rod (4) to control connection or disconnection between the lower pull rod (3) and the upper pull rod (4).

8. The pressurizing device according to claim 7, wherein the quick-release assembly (8) comprises:
a bayonet head (81) disposed at a lower end of the upper pull rod (4); and
a bayonet groove(82) provided at the upper end of the lower pull rod (3), wherein the bayonet head (81) is capable of being engaged with and connected to the bayonet groove (82).

9. The pressurizing device according to claim 8, wherein the lower pull rod (3) is rotatably disposed on the base (1), the lower pull rod (3) moves upward to an initial position along the reset groove (12), and an adjustment gap is formed between the bayonet head (81) and the bayonet groove (82) to ensure that the lower pull rod (3) is rotatable.

10. A vulcanizing machine, comprising the pressurizing device according to any one of claims 1 to 9 and a mold, wherein the pressurizing device is used for providing a mold clamping force for the mold.
